Europäisches Patentamt

European Patent Office

Office européen des brevets

(19)

(11) Numéro de publication : **0 138 630**
**B1**

(12) **FASCICULE DE BREVET EUROPÉEN**

(45) Date de publication du fascicule du brevet :
30.08.89

(51) Int. Cl.⁴ : **G 02 B   6/24**

(21) Numéro de dépôt : **84401147.8**

(22) Date de dépôt : **05.06.84**

(54) **Dispositif de raccordement d'une fibre optique et d'un photodétecteur et procédé de positionnement de ceux-ci.**

(30) Priorité : 14.06.83 FR 8309815

(43) Date de publication de la demande :
24.04.85 Bulletin 85/17

(45) Mention de la délivrance du brevet :
30.08.89 Bulletin 89/35

(84) Etats contractants désignés :
**DE NL**

(56) Documents cités :
**EP--A-- 0 006 662**
**EP--A-- 0 111 263**
**WO--A--79 /000 99**
**DE--A-- 2 750 322**
**GB--A-- 2 082 342**
**JP--A--57 186 725**
**US--A-- 3 996 526**
**US--A-- 4 431 261**
**PATENTS ABSTRACTS OF JAPAN, vol. 1, no. 81, 28 juillet 1977, page 1548 E 77 & JP - A - 52 17 835**
**IBM Tech. Discl. Bull., vol. 23, no. 10, p. 4616**

(73) Titulaire : **SOCIETE ANONYME DE TELECOMMUNI-CATIONS**
**41, rue Cantagrel**
**F-75624 Paris Cedex 13 (FR)**

(72) Inventeur : **Mery, Jean-Paul**
**41, rue Cantagrel**
**F-75624 Paris Cedex 13 (FR)**

(74) Mandataire : **Martinet & Lapoux**
**62, rue des Mathurins**
**F-75008 Paris (FR)**

EP 0 138 630 B1

Jouve, 18, rue St-Denis, 75001 Paris, France

## Description

La présente invention concerne le positionnement d'une extrémité d'une fibre optique par rapport à une face photosensible d'un photodétecteur afin que la photodétecteur reçoive une puissance maximale du faisceau lumineux transmis par la fibre. L'extrémité de la fibre optique et le photodétecteur, tel qu'une photodiode forme un dispositif de raccordement destiné à constituer une interface optoélectronique à une extrémité de réception d'un système de transmission par fibre optique.

Selon la demande de brevet WO-A-7 900 099, un dispositif de raccordement comprend une embase en forme de U. A un sommet d'une première branche de l'embase est fixé un photodétecteur. Un alésage de l'autre branche de l'embase est traversé librement par une douille ayant un épaulement appliqué contre l'embase par un ressort. Un manchon entoure solidement une extrémité de fibre optique et est monté à coulissement dans la douille.

Pour positionner une face extrême de l'extrémité de fibre optique en regard d'une face photosensible du photodétecteur, un micromanipulateur est employé. Le micromanipulateur comprend un bâti ayant un coulisseau sur lequel est fixé l'embase afin de translater le photodétecteur suivant une direction normalement parallèle à l'axe de l'extrémité de fibre optique. Il est également prévu des moyens fixés au bâti pour translater un mandrin enserrant le manchon suivant deux directions orthogonales à l'axe de l'extrémité de fibre optique.

La position désirée de l'extrémité de fibre optique par rapport au photodétecteur est contrôlée par une mesure classique de puissance électrique recueillie par le photodétecteur à partir d'un faisceau lumineux émis par l'extrémité de fibre optique. Cette position désirée est figée en collant le manchon dans la douille, ce qui fixe la position de l'extrémité de fibre optique en direction axiale, puis en collant l'épaulement de la douille à la seconde branche de l'embase. Le dispositif de raccordement est alors prêt à l'emploi après désolidarisation de l'embase et du coulisseau et désolidarisation du manchon et du mandrin.

Le dispositif de raccordement selon la WO-A-7 900 099 nécessite ainsi un micromanipulateur spécial, une fabrication de pièces très particulières ainsi que de nombreuses opérations de montage et démontage qui confèrent un coût de fabrication relativement élevé au dispositif. En outre, l'opération de positionnement exige un circuit de polarisation et d'amplification adapté aux caractéristiques particulières du photodétecteur. Etant donné que la distance entre la face photosensible du photodétecteur et la face extrême de l'extrémité de fibre optique doit être de l'ordre de quelques centièmes de millimètre, le déplacement du coulisseau peut conduire à une application brutale de la face extrême contre la face photosensible, ce qui détériore celles-ci.

La présente invention vise à fournir un procédé de positionnement rapide de l'extrémité d'une fibre optique par rapport à un photodétecteur nécessitant aucun moyen de mesure de puissance classique et utilisant un micromanipulateur de structure connue.

Le dispositif de raccordement obtenu par le procédé selon l'invention est du type de celui décrit dans la EP-A-0 111 263 publiée le 20 juin 1984 et comprise dans l'état de la technique conformément à l'article 54 (3) et (4) de la CBE.

Dans cette demande de brevet est décrit un dispositif de raccordement de l'extrémité d'une fibre optique à des moyens de photodétection du type défini dans le préambule de la revendication 1. L'embase est composée de l'assemblage d'une plaque plane pour supporter un circuit hybride de réception ainsi qu'un bloc de fixation sur lequel est fixé l'extrémité de fibre, d'une plaquette en céramique, et de deux équerres métalliques dont des ailes sont fixées sur la plaque plane et d'autres ailes maintiennent la plaquette en céramique perpendiculairement à la plaque, afin de former un dièdre droit. Entre les équerres, la plaque en céramique est percée d'un trou dans lequel pénètre quasi-complètement l'extrémité de la fibre pour être positionnée en regard d'une photodiode PIN fermant l'embouchure opposée du trou. Selon cette demande de brevet, le positionnement de l'extrémité de la fibre est obtenue encore par le déplacement de l'extrémité de fibre par un micromanipulateur, conjugué à une mesure de photocourant de la diode PIN.

Selon l'invention, le positionnement fait appel à des mesures optiques, des moyens de mesure de puissance électrique pouvant être accessoirement utilisés pour vérifier les mesures optiques. A cette fin, le procédé de positionnement est tel que défini dans la revendication 1.

Les faces du dièdre sont utilisées avantageusement comme surfaces de référence pour positionner rapidement à vue et manuellement d'abord les moyens de photodétection pour les fixer sur la seconde face du dièdre, puis en posant le premier support sur la première face du dièdre sensiblement en vis-à-vis de la face photosensible.

Avantageusement, le second support, tel qu'une plaque rectangulaire, supportant un photodétecteur a un chant rectiligne qui est à une distance d'un centre de la face photosensible du photodétecteur sensiblement supérieur de quelques centièmes ou dizièmes de millimètre à la distance entre l'axe de l'extrémité de fibre optique et une face du premier support, tel qu'une plaquette, supportant l'extrémité de la fibre optique, applicable contre la première face du dièdre. Dans ce cas, l'application du chant rectiligne contre la première face du dièdre avant fixation de la plaque et l'application de la plaquette contre la première face du dièdre permet de positionner à vue la face extrême de l'extrémité de fibre optique sensiblement en alignement de la face photosensible. Le premier support peut être alors déplacé rapidement de quelques centièmes ou dizièmes de millimètre par un micromanipulateur classique pour positionner l'axe de l'extrémité de fibre optique colinéairement avec le centre de la face photosensible. Ces conditions contribuent avantageusement à positionner l'axe optique de l'extrémité de fibre par rapport au centre de la face photosensible en fonction d'une épaisseur faible de colle entre le premier support et la première face du dièdre lors de la fixation ultérieure du premier support au dièdre.

Il est à noter que les moyens optiques de grossissement, tels qu'une loupe ou un microscope binoculaire, sont utilisables quelles que soient les caractéristiques dimensionnelles et fonctionnelles du photodétecteur, et qu'un micromanipulateur classique sans une quelconque modification peut être utilisé pour déplacer le premier support.

D'autres avantages et caractéristiques de l'invention apparaîtront plus clairement à la lecture de plusieurs réalisations de l'invention en référence aux dessins annexés correspondants dans lesquels :

— les Figs. 1A et 1B sont deux vues en perspective d'un dispositif de raccordement selon l'invention ayant un photodétecteur déjà positionné et une extrémité d'une fibre optique en cours de positionnement, respectivement ;

— la Fig. 2 est une vue en perspective du dispositif de raccordement après positionnement définitif de l'extrémité de la fibre optique ;

— les Figs. 3A, 3B et 3C sont des vues schématiques de côté montrant une direction d'observation du raccordement du photodétecteur et de l'extrémité de la fibre, le raccordement vu au moyen d'un microscope binoculaire dans la direction d'observation, et une image de l'extrémité de la fibre optique réfléchie par un substrat supportant le photodétecteur, respectivement.

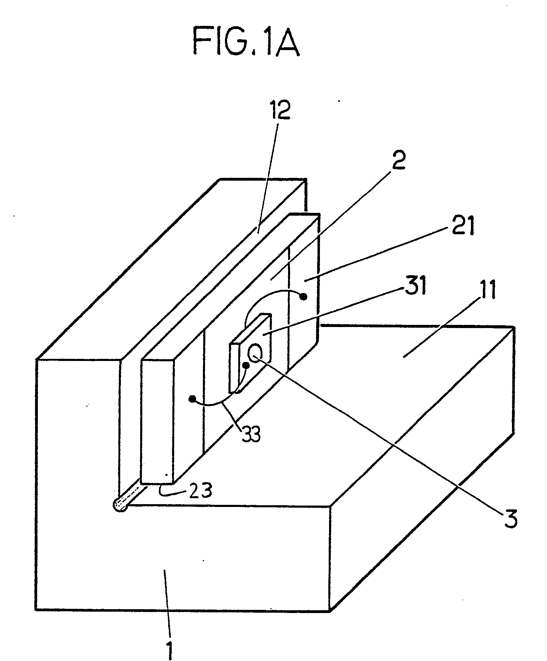

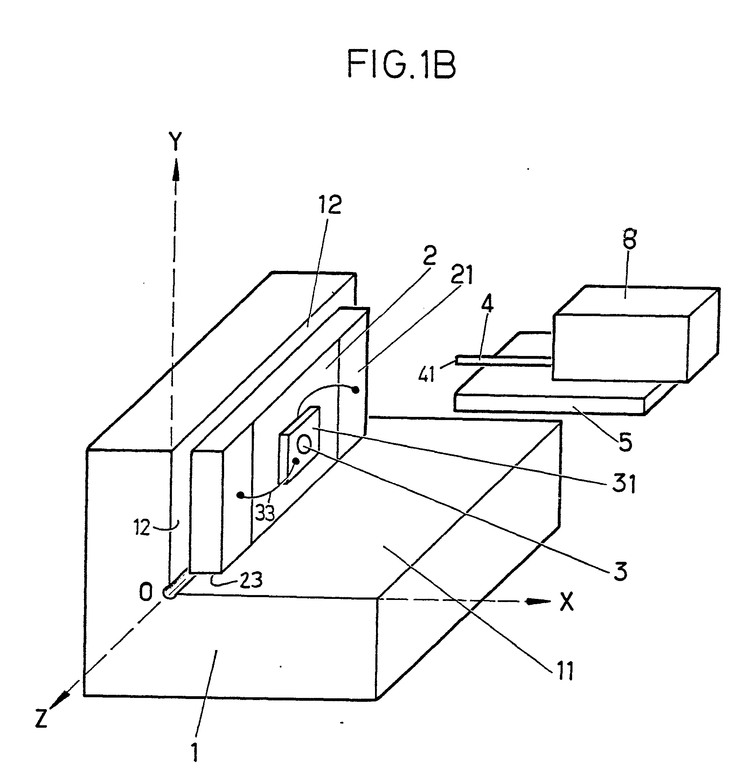

En se référant aux Figs. 1A et 1B, un dispositif de raccordement selon l'invention comprend une embase 1 dans laquelle est pratiqué un dièdre droit ayant deux faces planes 11 et 12. Selon la réalisation illustrée, la face 11 est coplanaire à un plan horizontal XOZ et la face 12 est coplanaire à un plan vertical YOZ. Les plans XOZ et YOZ définissent ainsi un repère orthogonal de référence ayant une arête du dièdre pour axe OZ.

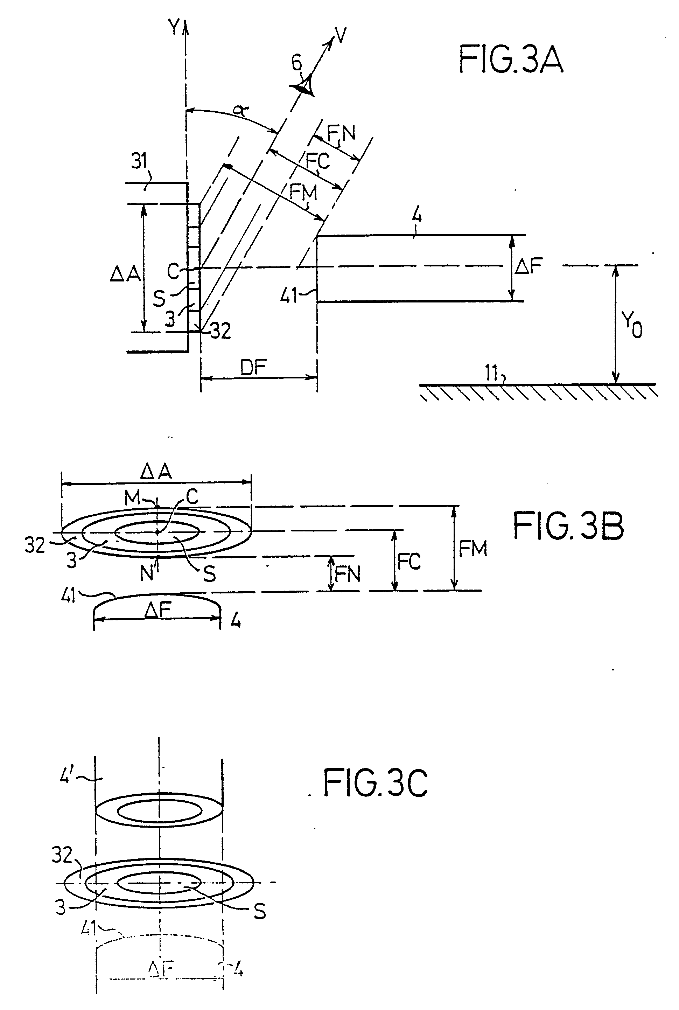

Un photodétecteur tel qu'une photodiode 3 est implanté dans une face verticale d'un petit substrat plat rectangulaire 31. La photodiode 3 a une face photosensible se présentant comme un disque circulaire, entourée par un anneau circulaire métallisé 32 formant l'une des deux bornes de la photodiode, comme montré en détail aux Figs. 3A et 3B. Le substrat 31 est fixé contre une face verticale d'un porte-diode 2, telle qu'une plaque rectangulaire isolante en céramique. Deux bordures verticales 21 du porte-diode 2 sont métallisées de part et d'autre du substrat 31 afin de réaliser des contacts électriques accessibles reliés aux bornes de la photodiode 2 par deux straps conducteurs soudés 33. Une autre face verticale du porte-diode 2 est collée contre la face verticale 12 du dièdre 1. De préférence, la position définitive du porte-diode 2 contre la face 12 est obtenue manuellement en appliquant un chant rectiligne 23 du porte-diode 2 convenablement rectifié contre la première face 11 pendant la polymérisation de la colle sur la face 12. Dans ce cas, un centre C de la photodiode 3 est situé au-dessus de la face horizontale 11 du dièdre à une hauteur prédéterminée $Y_0$ ou de préférence à une hauteur supérieure de quelques centièmes ou dizièmes de millimètre à $Y_0$. La hauteur $Y_0$ est définie dans la suite. Selon une autre variante, la position définitive du porte-diode 2 est obtenue à l'aide d'un micromanipulateur ayant une table de référence recevant l'embase 1.

La face horizontale 11 du dièdre 1 sert de surface de référence pour le positionnement d'une extrémité d'une fibre optique 4. Comme montré à la Fig. 1B, une extrémité de la fibre 4 est amenée en regard de la photodiode 3 en étant maintenue avec rigidité pour obtenir un positionnement précis. En effet, une extrémité de fibre optique offre une élasticité peu compatible avec un positionnement précis. La présente invention préconise une rigidification de l'extrémité de la fibre 4 en renforçant celle-ci au moyen d'un porte-fibre 5, tel qu'une plaquette rectangulaire en céramique supportant rectilignement l'extrémité de la fibre 4.

Une face horizontale du porte-fibre 5 est recouverte de colle et reçoit une extrémité de la fibre 4, de préférence colinairement à un grand axe du porte-fibre 5. Une face extrême 41 de l'extrémité de la fibre 4 destinée à être en regard de la photodiode 3 saille de quelques millimètres un petit bord du porte-fibre 5 disposé parallèlement à la face 12. L'épaisseur du porte-fibre 5 est choisie de telle sorte que la distance entre l'axe de l'extrémité de la fibre 4 et une grande face opposée non encollée du porte-fibre 5 soit égale à $Y_0$. Le porte-fibre 5 peut être remplacé par une férule permettant également de saisir et fixer l'extrémité de la fibre 4. Un manche 8, tel qu'un pavé rainuré, est plaqué sur la face encollée du porte-fibre 5 et recouvre un petit tronçon de la fibre 4 en deçà de la face extrême 41.

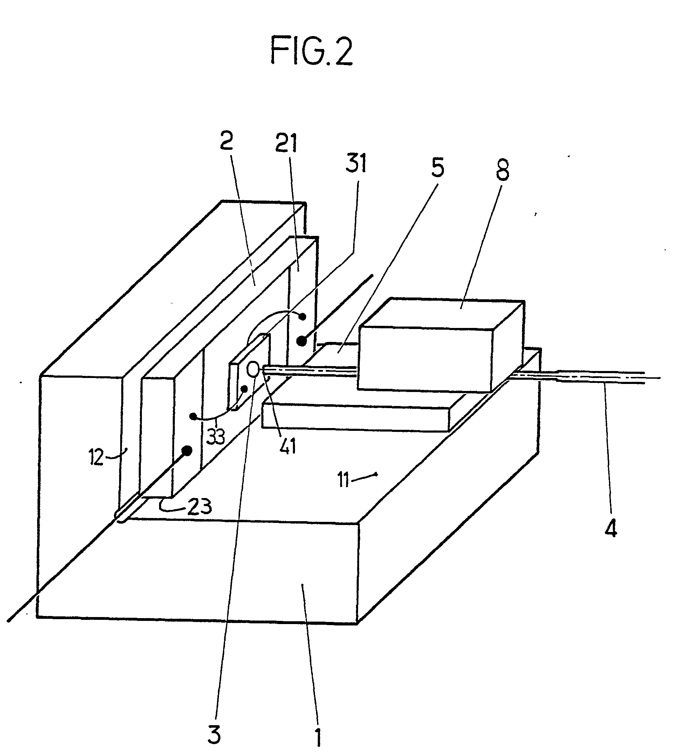

Le manche 8 est saisi manuellement et le porte-fibre 5 est appliqué et glissé sur la première face 11 du dièdre 1 afin d'orienter à vue l'extrémité de la fibre 4 sensiblement perpendiculairement à la face photosensible de la photodiode 3 et de positionner la face extrême 41 de la fibre 4 à quelques centièmes de millimètre de la face photosensible de la photodiode 3, comme montré à la Fig. 2. L'axe de l'extrémité de la fibre 4 est alors à une distance de la face 11 égale à $Y_0$ et sensiblement en dessous du centre C de la photodiode de quelques centièmes ou dizièmes de millimètre.

Puis, le positionnement de la face extrême 41 de la fibre 4 est parfait à l'aide d'un micromanipulateur ayant une pince ou mors d'un étau enserrant des chants longitudinaux du manche 8 et déplaçant ainsi le porte-fibre 5 dans un espace à trois dimensions au-dessus de la face 11. Les microdéplacements du porte-fibre 5 sont contrôlés grâce à des moyens optiques de grossissement afin que l'axe de l'extrémité de la fibre soit parfaitement perpendiculaire à la face photosensible de la photodiode et passe par le centre C de celle-ci. Il est à noter qu'un déplacement suivant l'axe vertical OY pour positionner l'axe de l'extrémité de la fibre 4 dans un plan horizontal passant par le centre C de la photodiode 3 est obtenu rapidement en raison du positionnement initial de l'axe de l'extrémité de fibre optique à une distance $Y_0$ au-dessus de la face 11, et décalé de quelques centièmes ou dizièmes de millimètre par rapport au centre C.

Les moyens optiques de grossissement consistent en un microscope binoculaire stéréoscopique montré schématiquement en 6 à la Fig. 3A au-dessus de la face 11, ou en une loupe binoculaire. Le microscope 6 a un axe optique V dirigé vers la photodiode 3 et la face extrême 41, de préférence parallèle au plan vertical XOY et faisant un angle de visée $\alpha$ avec le plan vertical YOZ parallèle à la face photosensible de la photodiode. Le contour circulaire de la photodiode 3 est repérable par l'anneau métallisé 32 qui est vu comme un anneau elliptique dans le microscope binoculaire 6, comme montré à la Fig. 3B. Le contour externe de l'anneau elliptique a un grand axe parallèle à l'axe OZ et égal au diamètre $\delta A$ de l'anneau 32 et a un petit axe MN parallèle au plan XOY. La face extrême 41 de la fibre 4 est vue comme une demi-ellipse à des distances FN, FC et FM du sommet inférieur N du petit axe, du centre C et du sommet supérieur M du petit axe de l'anneau elliptique 32 respectivement.

Un faisceau de lumière blanche est injecté dans la fibre 4, émis par la face extrême 41 de la fibre et forme un spot S sur la face photosensible de la photodiode 3. L'observation de la forme du spot S et de la position du spot S par rapport à l'anneau 32 permet de positionner convenablement l'extrémité de la fibre 4 à une position idéale recherchée. Cette position idéale correspond à un spot S ayant un contour visible elliptique parfaitement concentrique à l'anneau elliptique 32 observé au microscope binoculaire 6. La recherche de la position idéale est obtenue en déplaçant le porte-fibre 5 au moyen du micromanipulateur. Le déplacement s'effectue essentiellement parallèlement au plan de référence XOZ défini par la face 11 du dièdre. Seulement un très faible déplacement du porte-fibre 5 suivant la direction OY n'est nécessaire puisque l'axe optique de l'extrémité de la fibre 4 est déjà à quelques centièmes ou dizièmes de millimètre de la face 11. Ces quelques centièmes ou dizièmes de millimètre correspondent à la différence entre la distance du centre C de la photodiode et la hauteur $Y_0$ et tiennent compte d'une épaisseur de colle destinée à fixer le porte-fibre 5 sur la face 11.

Après avoir repéré la position idéale trouvée de l'extrémité de la fibre à l'aide de moyens de mesure du micromanipulateur, le porte-fibre 5 est retirée et la face 11 est enduite de colle. Puis le porte-fibre 5 est à nouveau déplacé à la position idéale repérée et maintenu à cette position par la colle.

Selon une autre variante, le porte-fibre 5 est en métal, tel qu'aluminium, cuivre ou laiton, et est collé et/ou soudé sur la face 11 de l'embase 1. Les matériaux mentionnés ci-dessus, y compris la céramique, ne subissent aucune déformation pendant la polymérisation de la colle et/ou pendant le soudage.

Le dispositif de raccordement d'une fibre et d'un photodétecteur ainsi obtenu est monobloc et présente toutes les qualités pour résister aux contraintes thermiques et mécaniques en cours d'utilisation et reste compatible avec une industrialisation aisée.

Selon une autre variante du procédé de positionnement, la position idéale de l'extrémité de la fibre 4 est en outre contrôlée par un repérage d'une image 4' de l'extrémité de la fibre par rapport au plan de la face photosensible de la photodiode 3, comme montré à la Fig. 3C. En effet, le substrat 31 de la photodiode 3 est semi-réfléchissant. L'alignement souhaité de la fibre 4 est obtenu lorsque des bords de l'extrémité de la fibre 4 sont observés en alignement avec des bords conjugués de son image 4'.

Selon une autre variante, la face 12 contre laquelle est collé le porte-diode 2, ou le porte-diode 2 lui-même est une carte de circuit imprimé supportant des composants électroniques discrets et/ou intégrés formant un circuit hybride. Le circuit hybride a pour fonction notamment de polariser la photodiode et de préamplifier un signal électrique obtenu par conversion optique-électrique d'un signal optique transmis par l'extrémité de la fibre 4 vers la photodiode 3. La position idéale de l'extrémité de la fibre optique 4 est directement déterminée ou est contrôlée après positionnement au moyen du microscope binoculaire 6 au moyen d'une mesure de puissance d'un signal électrique en sortie du circuit hybride. La position idéale correspond à un maximum de puissance du signal électrique.

Par ailleurs, l'utilisation du microscope binoculaire permet de mesurer précisément la position de la face extrême 41 de l'extrémité de la fibre 4 par rapport à la face photosensible de la photodiode 3. En référence aux Figs. 3A et 3B, la distance DF entre la face extrême 41 de la fibre et la face photosensible de la photodiode 3 est déduite de l'une des trois relations suivantes en fonction des distances FM, FC et FN mesurées au moyen de réticules équipant des oculaires du microscope 6, et en fonction des diamètres externes prédéterminés $\Delta A$ et $\Delta F$ de l'anneau circulaire 32 et de l'extrémité de la fibre 4 et de l'angle de visée prédéterminé $\alpha$.

1) $DF \cos \alpha = FM - (\Delta A/2) \sin \alpha + (\Delta F/2) \sin \alpha$
ou   $DF = FM/(\cos \alpha) + (\Delta F - \Delta A)(tg \, \alpha)/2$

2) $DF \cos \alpha = FC + (\Delta F/2) \sin \alpha$
ou   $DF = FC/(\cos \alpha) + (\Delta F \cdot tg \, \alpha)/2$

3) $DF \cos \alpha = FN + (\Delta A/2) \sin \alpha + (\Delta F/2) \sin \alpha$
ou   $DF = FN/(\cos \alpha) + (\Delta F + \Delta A)(tg \, \alpha)/2$

Il est encore possible de ne pas effectuer de mesure de distance en positionnant l'extrémité de la fibre 4 afin que la distance FM, FC, FN dans la relation respective précédente soit nulle. La distance réelle DF entre la photodiode 3 et la face 41 de l'extrémité de la fibre est alors exprimée par l'une des relations respectives suivantes :

DF = (ΔF — ΔA) (tg α)/2

DF = (ΔF · tg α)/2

DF = (ΔF + ΔA) (tg α)/2

Il est à noter que lorsque la distance FM est égale à zéro, si le diamètre ΔF de l'extrémité de la fibre 4 est inférieur au diamètre ΔA de l'anneau elliptique, la distance DF est négative, ce qui indique que l'extrémité de la fibre est trop rapprochée de la photodiode et que l'extrémité de la fibre et la photodiode sont détériorées. En conséquence, le positionnement de l'extrémité de la fibre pour obtenir une distance FM égale à zéro n'est effectuée que lorsque le diamètre ΔF de la fibre est égal ou supérieur au diamètre externe ΔA de l'anneau 32.

Selon une autre variante de mesure de distance, deux points homologues des bords de la fibre 4 et de son image 4' sont repérés afin de déduire la distance DF. Une telle mesure est applicable à une face extrême 41 de fibre lentillée ou cassée.

## Revendications

1. Procédé de positionnement d'une extrémité de fibre optique (4) par rapport à des moyens de photodétection (2, 3) dans un dispositif de raccordement de l'extrémité de fibre optique aux moyens de photodétection, ledit dispositif comprenant une embase (1) formant un dièdre droit ayant une première face (11) sur laquelle est fixé un premier support (5, 8) supportant l'extrémité de fibre optique (4), et une seconde face (12) sur laquelle sont fixés les moyens de photodétection (2, 3) l'extrémité de fibre optique (4) ayant une face extrême (41) en regard d'une face photosensible (3) des moyens de photodétection (2, 3) parallèle à la seconde face du dièdre (1), caractérisé en ce que

a) les moyens de photodétection (2, 3) sont fixés à la seconde face (12) du dièdre (1) afin qu'un centre (C) de la face photosensible (3) soit à une hauteur au-dessus de la première face (11) du dièdre égale ou sensiblement supérieure à une distance (Yo) entre l'axe de l'extrémité de fibre optique (4) et une face du premier support (5, 8) fixable à la première face (11) du dièdre (1) ;

b) des moyens optiques de grossissement (6) sont pointés vers le centre (C) de la face photosensible (3) ;

c) un faisceau de lumière est injecté dans la fibre (4) et est émis par ladite face extrême (41) ;

d) le premier support (5, 8) est déplacé suivant trois directions (OX, OY, OZ) au moyen d'un micromanipulateur classique pour positionner la face extrême (41) à quelques centièmes de millimètre de la face photosensible (3) et pour orienter la face extrême (41) à une position dite idéale telle qu'un spot (S) formé par le faisceau de lumière sur la face photosensible (3) soit concentrique à ladite face photosensible (3), la position idéale étant contrôlée par observation à travers les moyens optiques 6) lorsque le spot (S) vu à travers lesdits moyens présente un contour elliptique concentrique à un contour elliptique délimitant la face photosensible (3) ; et

e) le premier support (5, 8) à la position idéale est fixé sur la première face (11) du dièdre (1).

2. Procédé conforme à la revendication 1, caractérisé en ce que le contour elliptique délimitant la face photosensible (3) est celui d'un anneau métallisé (32) entourant la face photosensible (3) et, de préférence, formant une borne des moyens de photodétection (2, 3).

3. Procédé conforme à la revendication 1 ou 2, caractérisé en ce qu'un chant rectiligne (23) des moyens de photodétection (2, 3) est appliqué contre la première face (11) du dièdre avant la fixation des moyens de photodétection à la seconde face (12) du dièdre (1).

4. Procédé conforme à l'une quelconque des revendications 1 à 3, caractérisé en ce que le positionnement de la face extrême (41) de l'extrémité de fibre optique (4) à la position idéale est en outre contrôlée à travers les moyens optiques (6) lorsque des bords de l'extrémité de fibre optique (4) sont observés en alignement avec des bords conjugués d'une image (4') de l'extrémité de fibre optique réfléchie par la face photosensible (3).

5. Procédé de positionnement conforme à l'une quelconque des revendications 1 à 4, caractérisé en ce que les moyens optiques de grossissement (6) sont une loupe binoculaire ou un microscope binoculaire.

6. Procédé de positionnement conforme à l'une quelconque des revendications 1 à 5, caractérisé en ce que les moyens optiques de grossissement (6) permettent de mesurer des distances (DF, FM, FC, FN) entre des points caractéristiques de la face extrême (41) de l'extrémité de fibre optique (4) et la face photosensible (3).

## Claims

1. Method for positioning an end of an optical fiber (4) with respect to photodetection means (2, 3) in a device for connecting the optical fiber end to the photodetection means, said device comprising a base member (1) forming a right dihedron having a first face (11) on which is secured a first support member (5, 8) holding the end of the optical fiber (4), and a second face (12) on which are secured the photodetection means (2, 3), the end of the optical fiber (4) having an endface (41) opposite to a photosensitive face (3) of the photodetection means (2, 3) parallel to the second face of the dihedron (1), characterized in that

a) the photodetection means (2, 3) are secured to the second face (12) of the dihedron (1) whereby a center (C) of the photosensitive face (3) is at a height above the first dihedron face (11) equal to or substantially greater than a distance (Yo) between the axis of the end of the optical fiber (4) and a face of the first support member (5, 8) applied against the first face (11) of the dihedron (1) ;

b) optical magnifying means (6) are aimed towards the center (C) of the photosensitive face (3) ;

c) a light beam is injected into the fiber (4) and is emitted by said endface (41) ;

d) the first support member (5, 8) is moved in three directions (OX, OY, OZ) by means of a standard micromanipulator to position the endface (41) within a few hundredths of millimetre of the photosensitive face (3) and to orientate the endface (41) to a so-called ideal location such that a spot (S) formed by the light beam on the photosensitive face (3) is concentric with said photosensitive face (3), the ideal location being checked by observing through the optical means (6) when the spot (S) seen through said means has an elliptical outline concentric with an elliptical outline delimiting said photosensitive face (3) ; and

e) the first support member (5, 8) at the ideal location is secured on the first face (11) of the dihedron (1).

2. Method according to claim 1, characterized in that the elliptical outline delimiting the photosensitive face (3) is the one of a metal-plated ring (32) surrounding the photosensitive face (3) and, preferably, forming a terminal of the photodetection means (2, 3).

3. Method according to claim 1 or 2, characterized in that a rectilinear edge (23) of the photodetection means (2, 3) is applied against the first face (11) of the dihedron before the photodetection means are secured to the second face (12) of the dihedron (1).

4. Method according to any one of claims 1 to 3, characterized in that the position of the endface (41) of the end of the optical fiber (4) at the ideal location is checked through the optical means (6) when the edges of the end of the optical fiber (4) are observed as being aligned with conjugate edges of an image (4′) of the optical fiber end reflected by the photosensitive face (3).

5. Method of positioning according to any one of claims 1 to 4, characterized in that the optical magnifying means (6) are a binocular magnifying glass or a binocular microscope.

6. Method of positioning according to any one of claims 1 to 5, characterized in that the optical magnifying means (6) allow measuring distances (DF, FM, FC, FN) between characteristic points of the endface (41) of the end of the optical fiber (4) and the photosensitive face (3).

**Patentansprüche**

1. Verfahren zur Positionierung des Endes einer optischen Faser (4) gegenüber Photodektororganen (2, 3) in einer Vorrichtung zur Verbindung des Endes der optischen Faser mit den Photodektororganen, wobei diese Vorrichtung einen Sockel (1) aufweist, der einen rechten Winkel mit einer ersten Fläche (11), auf welcher ein erster, das Ende der optischen Faser (4) haltender Träger (5, 8) befestigt ist, und mit einer zweiten Fläche (12), auf welcher die Photodetektororgane (2, 3) befestigt sind, bildet, und wobei das Ende der optischen Faser (4) eine einer parallel zu der zweiten Fläche des winkelförmigen Sockels (1) verlaufenden lichtempfindlichen Fläche (3) der Photodetektororgane (2, 3) gegenüberstehende Abschlußfläche (41) aufweist, dadurch gekennzeichnet, daß

a) die Photodektororgane (2, 3) auf der zweiten Fläche (12) des winkelförmigen Sockels (1) so befestigt sind, daß ein Mittelpunkt (C) der lichtempfindlichen Fläche (3) eine Höhe oberhalb der ersten Fläche (11) des Sockels einnimmt, die gleich oder etwas größer als eine Entfernung (Yo) zwischen der Achse des Endes der optischen Faser (4) und einer Fläche des ersten und auf der ersten Fläche (11) des Sockels (1) befestigbare Trägers (5, 8) ist ;

b) optische Vergrößerungmittel auf den Mittelpunkt (C) der lichtempfindlichen Fläche (3) ausgerichtet sind ;

c) ein Lichtstrahl in die Faser (4) eingegeben und aus der Abschlußfläche (41) ausgestrahlt wird ;

d) der erste Träger (5, 8) nach drei Richtungen (OX, OY, OZ) mit Hilfe einer klassischen Mikroverstelleinrichtung verschoben wird, um die Abschlußfläche (41) einige Hundertstel mm vor der lichtempfindlichen Fläche (3) zu positionieren und um die Abschlußfläche (41) in eine sogenannte ideale Position zu bringen, so daß ein durch den Lichtstrahl auf der lichtempfindlichen Fläche (3) gebildeter Punkt (S) konzentrisch zur lichtempfindlichen Fläche (3) ist, wobei die ideale Position durch Beobachten mittels der optischen Mittel (6) kontrolliert wird, bis der durch die genannten Mittel gesehene Punkt (S) eine elliptische Form hat, die konzentrisch zu einer die lichtempfindliche Fläche (3) begrenzenden elliptischen Kontur ist ; und

e) der erste Träger (5, 8) in der idealen Position auf der ersten Fläche (11) des Sockels (1) befestigt wird.

2. Verfahren nach Anspruch 1, dadurch gekennzeichnet, daß die die lichtempfindliche Fläche (3) begrenzende elliptische Kontur ein metallisierter Ring (32) ist, der die lichtempfindliche Fläche (3) umfängt und vorzugsweise einen Anschluß der Photodetektororgane (2, 3) bildet.

3. Verfahren nach Anspruch 1 oder 2, dadurch gekennzeichnet, daß eine ebene Schmalseite (23) der Photodetektororgane (2, 3) gegen die erste Fläche (11) des Sockels (1) vor der Befestigung der Photodetektororgane (2, 3) auf der zweiten Fläche (12) des Sockels (1) angelegt wird.

4. Verfahren nach einem der Ansprüche 1 bis 3, dadurch gekennzeichnet, daß die Positionierung der Abschlußfläche (41) des einen Endes der optischen Faser (4) in die ideale Position unter anderem durch die optischen Mittel (6) kontrolliert wird, bis Ränder des Endes der optischen Faser (4) in Ausrichtung mit den zugeordneten Rändern eines von der lichtempfindlichen Fläche (3) reflektierten Bildes (4') des Endes der optischen Faser (4) beobachtet werden.

5. Verfahren nach einem der Ansprüche 1 bis 4, dadurch gekennzeichnet, daß die optischen Vergrößerungsmittel (6) eine binokulare Lupe oder ein binokulares Mikroskop sind.

6. Verfahren zur Positionierung nach einem der Ansprüche 1 bis 5, dadurch gekennzeichnet, daß die optischen Vergrößerungsmittel (6) das Messen der Abstände (DF, FM, FC, FN) zwischen den charakteristischen Punkten der Abschlußfläche (41) des Endes der optischen Faser (4) und der lichtempfindlichen Fläche (3) erlauben.

# FIG.1A

# FIG.1B

# FIG.2

FIG.3A

FIG.3B

FIG.3C

4